# EUROPEAN PATENT APPLICATION

(11) **EP 1 739 540 A2**
(43) Date of publication of application: **03.01.2007**
(21) Application number: 06116102.2
(22) Date of filing: 26.06.2006
(51) Int. Cl.: G06F 3/12

(54) **Control of offline printing requests**

(30) Priority: 29.06.2005 KR 2005056939
(71) Applicant: SAMSUNG ELECTRONICS CO., LTD., Suwon-si, Gyeonggi-do 442-742 (KR)
(72) Inventor: KIM, Young-ju, Gyeonggi-do (KR)
(74) Representative: Walaski, Jan Filip

(57) **Abstract**

Provided are a method and apparatus for controlling printing jobs in a terminal such as a PC connected to an image forming apparatus when a printing job is requested while the image forming apparatus is off-line. The method includes receiving a printing job request from an application program, detecting whether the image forming apparatus is off-line in response to the printing job request, indicating that the image forming apparatus is off-line and receiving a selection of whether to perform or cancel the requested printing job from a user when the image forming apparatus is off-line, and storing image data of the requested printing job in a memory when the user selects performing the requested print job. A user is asked whether to continue to perform the requested printing job when the image forming apparatus is off-line and the user can select a printing job to be performed from printing jobs temporarily stored in a memory when the status of the image forming apparatus converts from off-line to on-line.

## Description

The present invention relates to the control of offline printing requests, particularly but not exclusively to a method and apparatus for controlling printing jobs requested by a user in a terminal such as a personal computer (PC) to which an image forming apparatus is connected. More particularly, the present invention relates to a method and apparatus for controlling printing jobs requested by a user when an image forming apparatus is off-line.

Image forming apparatuses convert documents created by users using application programs into encoded data and output the data on a print medium in a form viewable by users.

Generally, a request to print data created by a user is made by using an application program installed on a PC and the data is temporarily stored in a printer spooler. Thereafter, the data is transmitted to an image forming apparatus that is connected to the PC via a wired or wireless network such as parallel connection, a universal serial bus (USB) connection, or a Bluetooth connection. Recently, photo printers that are directly connected to a digital camera and which print image data input from the digital camera have been introduced on the market. As a result, a desired object can be photographed and the photo reproduced at any time, anywhere as long as a user has available to them an image capturing device such as a digital camera and a portable photo printer.

However, when the image forming apparatus is turned "off", is not connected to a terminal such as a PC, or data transmission is impossible due to a connection error between the terminal and the image forming apparatus, the image forming apparatus is off-line, and thus the data to be printed is not transmitted to the image forming apparatus even if a printing job is requested.

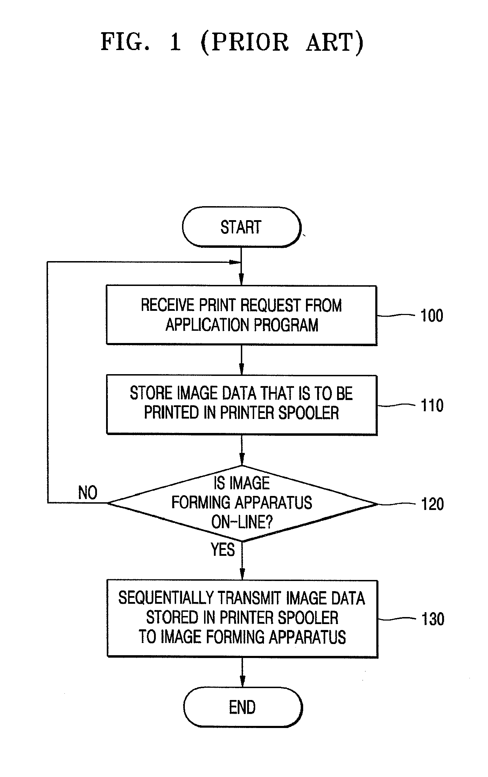

Figure 1 is a flow chart illustrating a conventional method of controlling printing jobs when an image forming apparatus is on/off-line. When a user requests a printing job for a specific document by using an application program installed on a PC at step 100, image data is temporarily stored in a printer spooler at step 110. It is determined whether the image forming apparatus is on-line at step 120, and if so, the image forming apparatus receives the print request and the document data temporarily stored in the printer spooler is sequentially transmitted to the image forming apparatus to perform printing, at step 130.

In contrast, when the image forming apparatus is off-line, the document data temporarily stored in the printer spooler is not transmitted to the image forming apparatus and all data for which print requests have been made is stacked in the printer spooler.

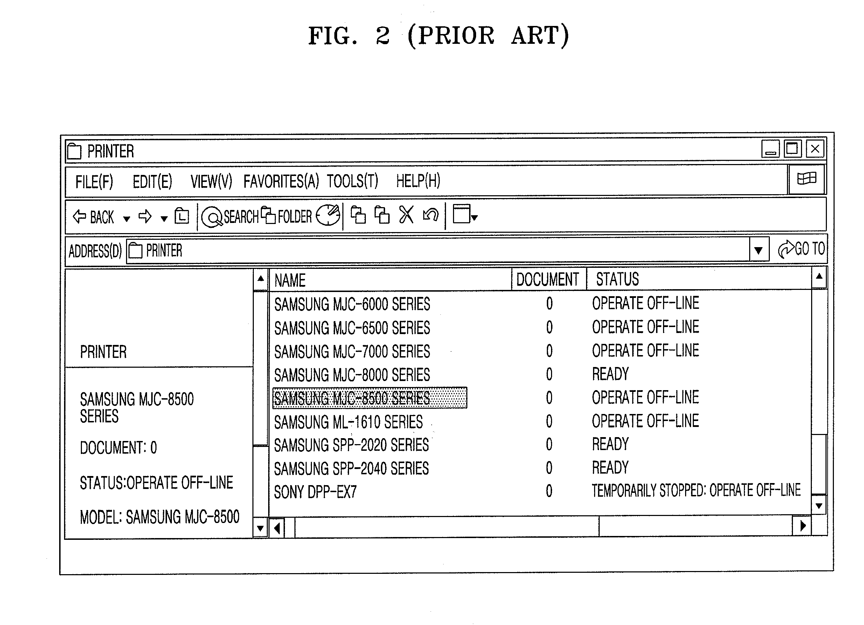

Figure 2 illustrates a printing job status information window showing printing jobs temporarily stored in a printer spooler. It can be seen that image forming apparatuses Samsung MJC-6000 series, Samsung MJC-6500 series, Samsung MJC-7000 series, Samsung MJC-8500 series, and Samsung ML-1610 are all off-line, and if one of the aforementioned printers is selected, information on printing jobs that was requested when the image forming apparatus is off-line can be seen.

Thereafter, when the status of the image forming apparatus is converted from off-line to on-line, all of the printing job data stored in the printer spooler is sequentially transmitted to the image forming apparatus to be printed.

As described above, in the conventional method of controlling printing jobs requested when an image forming apparatus is off-line, the user can inconveniently be required to activate a printing job status information window like the one illustrated in Figure 2 before requesting a printing job to detect whether or not the image forming apparatus is off-line or not, and then request a printing job, for instance using an application program. Also, when the status of the image forming apparatus is converted from off-line to on-line, all of the printing data stacked in the printer spooler is sequentially transmitted to the image forming apparatus to be printed, which can result in consumables such as print paper and toner being wasted due to the unnecessary repetition of printing jobs.

The present invention aims to address the above problems by providing a method and apparatus for controlling printing jobs of an image forming apparatus in which it is determined whether a user wants to continue the requested printing job when the image forming apparatus is off-line and allows the user to select which printing job to perform out of those printing jobs temporarily stored in a memory when the status of the image forming apparatus is converted from off-line to on-line.

According to an aspect of the present invention, a method of controlling printing jobs in a terminal connected to an image forming apparatus is provided. The method comprises receiving a printing job request from an application program, detecting whether the image forming apparatus is off-line in response to the printing job request, indicating that the image forming apparatus is off-line and receiving a selection of whether to perform or cancel the requested printing job from a user when the image forming apparatus is off-line, and storing image data of the requested printing job in a memory when the user selects performing the requested print job.

The off-line state of the image forming apparatus may comprise a connection state error between the terminal and the image forming apparatus, a state in which power is not supplied to the image forming apparatus, or a data transmitting and receiving error between the terminal and the image forming apparatus.

The storing of the image data in the memory may comprise storing the image data with information on the requested printing job in the memory. The information on the requested printing job may comprise at least one of information on the image forming apparatus, a name of a document that is to be printed, and information on a driver of the image forming apparatus.

According to another aspect of the present invention, a method of controlling printing jobs in a terminal connected to an image forming apparatus is provided. The method comprises detecting whether the image forming apparatus is on-line, displaying information on printing jobs stored in a memory included in the terminal when the status of the image forming apparatus is converted from off-line to on-line, receiving a selection of whether to perform or cancel the displayed printing jobs, and transmitting image data of printing jobs that are selected to be performed among the displayed printing jobs to the image forming apparatus.

The information on the requested printing job may comprise at least one of information on the image forming apparatus, a name of a document that is to be printed, and information on a driver of the image forming apparatus.

According to another aspect of the present invention, a method of controlling printing jobs in a terminal connected to an image forming apparatus is provided.

The method comprises receiving a printing job request from an application program, detecting whether the image forming apparatus is off-line in response to the printing job request and receiving a selection regarding whether to perform or cancel the requested printing job from a user when the image forming apparatus is off-line, storing image data of the requested printing job in a memory included in the terminal when the user selects performing the printing job, displaying information on the printing jobs stored in the memory when the status of the image forming apparatus is converted from off-line to on-line, and transmitting image data of the printing job that is selected to be performed to the image forming apparatus after receiving a selection regarding whether to perform or cancel the displayed printing jobs.

The off-line state of the image forming apparatus may comprise a connection state error between the terminal and the image forming apparatus, a state in which power is not supplied to the image forming apparatus, or a data transmitting and receiving error between the terminal and the image forming apparatus.

The storing of the image data in the memory may comprise storing the image data with information on the requested printing job in the memory. The information on the requested printing job may be at least one of information on the image forming apparatus, a name of a document that is to be printed, and information on a driver of the image forming apparatus.

According to another aspect of the present invention, an apparatus for controlling printing jobs in a terminal connected to an image forming apparatus is provided. The apparatus comprises a status detecting unit for detecting whether the image forming apparatus is off-line in response to a printing job request, a user interface for indicating that the image forming apparatus is off-line and receiving a selection regarding whether to perform or cancel the requested printing job from a user when the image forming apparatus is off-line, and a printer driver for storing image data of the printing job that is requested to be performed in a memory when the user selects performing the printing job by using the user interface.

The off-line state of the image forming apparatus may be the result of a connection error between the terminal and the image forming apparatus, a state in which power is not supplied to the image forming apparatus, or a data transmitting and receiving error between the terminal and the image forming apparatus.

The print driver may store the image data in the memory with information on the requested printing job in the memory.

The status detecting unit may generate information on the requested printing job and outputs the generated information to the user interface or broadcasts the generated information when the image forming apparatus is off-line, and the user interface unit may indicate that the image forming apparatus is off-line by using the information on the printing job and receives a selection regarding whether to perform or cancel the requested printing job from the user.

The information on the requested printing job may comprise at least one of information on the image forming apparatus, a name of a document that is to be printed, and information on a driver of the image forming apparatus.

According to another aspect of the present invention, an apparatus for controlling printing jobs in a terminal connected to an image forming apparatus is provided. The apparatus comprises a status detecting unit for detecting whether the image forming apparatus is on-line, a user interface unit for displaying information on printing jobs stored in the memory, receiving a selection regarding whether to perform or cancel the displayed printing jobs when status of the image forming apparatus is converted from off-line to on-line, and a data transmitting unit for transmitting to the image forming apparatus image data of the printing job selected to be performed by using the user interface.

The information on the printing job comprises at least one of information on the image forming apparatus, a name of a document that is to be printed, and information on a driver of the image forming apparatus.

According to another aspect of the present invention, a computer-readable recording medium having recorded thereon a program for executing the method of controlling printing jobs in a terminal connected to an image forming apparatus is provided.

Embodiments of the invention will now be described, by way of example, with reference to the accompanying drawings, in which:
Figure 1 is a flow chart illustrating a conventional method of controlling printing jobs when an image forming apparatus is on/off-line;
Figure 2 is a view of a printing job status information window illustrating printing jobs temporarily stored in a printer spooler;
Figure 3 is a block diagram illustrating an apparatus for controlling printing jobs according to an exemplary embodiment of the present invention;
Figure 4 is a block diagram illustrating the status detecting unit and user interface of Figure 3; and
Figure 5 is a flow chart illustrating a method of controlling printing jobs according to an exemplary embodiment of the present invention.

Throughout the drawings, like reference numerals will be understood to refer to like parts, components and structures.

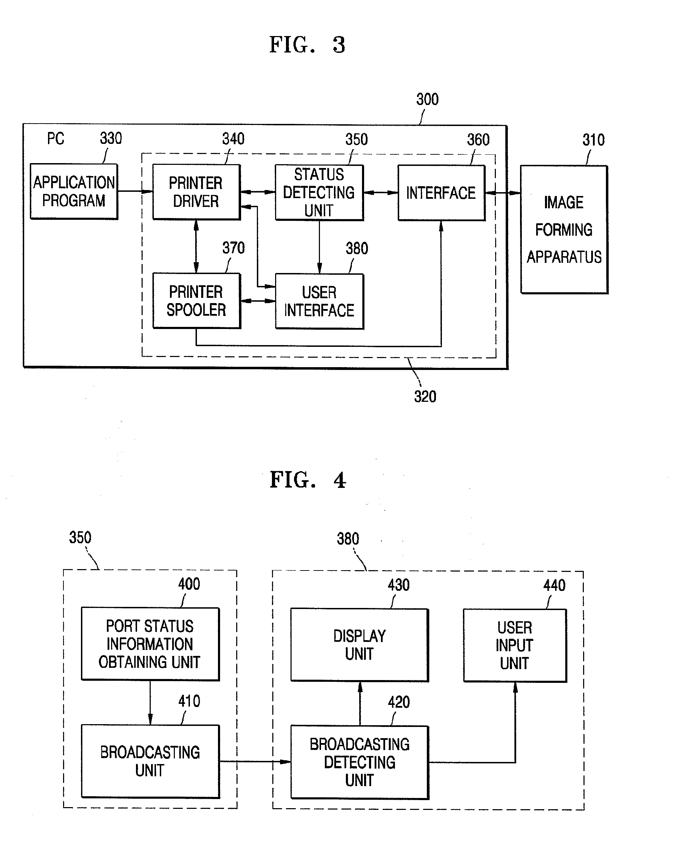

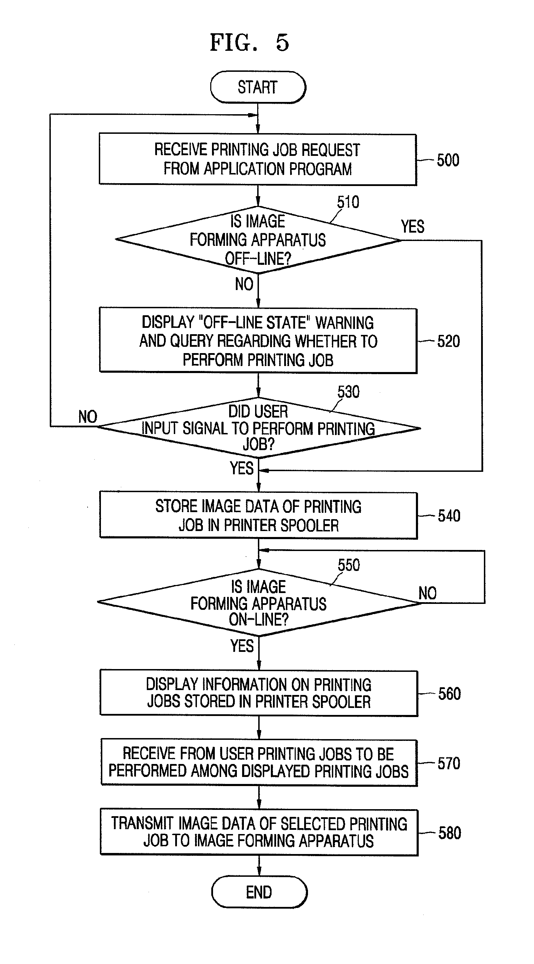

Figure 3 is a block diagram illustrating an apparatus 320 for controlling printing jobs according to an embodiment of the present invention. The apparatus 320 comprises a printer driver 340, a status detecting unit 350, an interface 360, a printer spooler 370, and a user interface 380. The operation of the apparatus 320 will be described with reference to a method of controlling printing jobs according to an embodiment of the present invention illustrated in Figure 5.

When a user creates a printing job relating to a specific document or images such as a photograph using an application program 330 installed on a personal computer (PC) 300, the printer driver 340 receives the printing job from the application program 330 at step 500.

The interface 360 transmits and receives, for example, image data to and from an image forming apparatus 310 to perform the printing job. The status detecting unit 350 transmits and receives a signal to and from the interface 360 to determine whether the image forming apparatus 310 is off-line at step 510. Step 510 may be performed only when a print job output from the application program 330 is received.

When, for instance, a cable for transmitting and receiving data between the interface 360 and the image forming apparatus 310 is not connected, the image forming apparatus 310 power is off, or when an error exists in a data transmitting or receiving setting of the image forming apparatus 310 or apparatus 320, the interface 360 cannot transmit or receive data to or from the image forming apparatus 310. In this case, the status detecting unit 350 detects that the image forming apparatus 310 is off-line. The off-line state may comprise a PRINTER_ATTRIBUTE_WORK_OFFLINE state or a PRINTER_STATUS_OFFLINE state.

If the image forming apparatus 310 is off-line, the status detecting unit 330 sends messages, for instance including a printer name, a port name, a document name, MFG, a model name, and a job ID to the user interface 380.

When the user interface 380 receives information that the image forming apparatus 310 is off-line from the status detecting unit 350, the user interface 380 displays a message that the image forming apparatus 310 is off-line on a monitor (not shown) and displays a question asking the user whether to continue the requested printing job at step 520.

An example of the user interface 380 for performing step 520 when the status detecting unit 350 detects that the image forming apparatus 310 is off-line and the image forming apparatus 310 is off-line will be described with reference to the block diagram illustrated in Figure 4.

A port status information obtaining unit 400 receives from the interface 360 information regarding a port which transmits and receives data to and from the image forming apparatus 310. Thereafter, the port status information obtaining unit 400 detects transmitting and receiving of data between the image forming apparatus 310 and the interface 360 to confirm whether the image forming apparatus 310 is on-line or off-line. A broadcasting unit 410 receives and broadcasts information regarding whether the image forming apparatus 310 is on-line or off-line from the port status information obtaining unit 400.

A broadcasting detecting unit 420 included in the user interface 380 detects information broadcasted by the broadcasting unit 410 and transmits off-line state alerting data and query message data asking whether to perform a print job to a display unit 430 when the information indicates that the image forming apparatus 310 is off-line. The display unit 430 receives the message data output from the broadcasting detecting unit 420 and displays the off-line state alerting data and the query message data asking whether to perform the print job. A user input unit 440 receives an answer from the user in response to the query of whether to perform the print job.

When the user is presented with the displayed query and inputs a request to continue to perform the print job via an input device such as a keyboard (not shown) or a mouse (not shown) connected to the PC 300, even if the image forming apparatus 310 is off-line at step 530, the printer driver 340 temporarily stores image data corresponding to the printing job that is to be performed in the printer spooler 370 at step 540. In step 540, the printer driver 340 may temporarily store the image data in the printer spooler 370 after adding information regarding the printing job to the image data. The printing job information stored in the printer spooler 370 together with the image forming apparatus 310 may also comprise the name of the image forming apparatus 310, the name of a document to be printed, and information relating to a driver, for instance the printer driver.

When the user cancels a printing job in step 530, the printing job requested by the application program 330 is deleted from the printer driver 340.

The status detecting unit 350 detects whether the image forming apparatus 310 is on-line or off-line and outputs a signal to the user interface 380 when the status of the image forming apparatus 310 is converted from off-line to on-line at step 550. When the user interface 380 receives from the status detecting unit 350 the signal for indicating that the status of the image forming apparatus 310 is converted from off-line to on-line, the user interface 380 reads information regarding temporarily stored printing jobs from the printer spooler 370 and then displays the information regarding the printing jobs at step 560.

The temporarily stored printing jobs in the printer spooler 370 are either printing jobs requested when the image forming apparatus 310 is off-line or printing jobs requested when the image forming apparatus 310 is on-line but are not completed because the image forming apparatus 310 was converted to off-line before image data was transmitted to the image forming apparatus 310.

The printing job information displayed in operation 560 may comprise the name of the image forming apparatus 310 that is to perform the printing job stored in the printer spooler 270, the name of a document to be printed, and information on a printer driver.

After the user views the information regarding the unperformed printing jobs temporarily stored in the printer spooler 370 and displayed in operation 560, the user selects those printing jobs that are to be performed from the displayed printing jobs using the user interface 380 at step 570. Also, the user may select printing jobs to be cancelled from the displayed printing jobs using the user interface 380.

The image data of the printing jobs selected to be performed in step 570 is transmitted from the printer spooler 370 to the image forming apparatus 310 via the interface 360 at step 580.

According to an exemplary embodiment of the present invention, in a method and apparatus for controlling printing jobs requested when an image forming apparatus is off-line, a user is asked whether to continue to perform the requested printing job when the image forming apparatus is off-line, and the user can select a printing job to be performed among printing jobs temporarily stored in a memory when the image forming apparatus converts from off-line to on-line. Thus, a printing error which can occur when a printing job is requested when the image forming apparatus is off-line can be prevented. In addition, unnecessary waste of consumables such as print paper and toner caused by printing all printing jobs temporarily stored in a memory when the status of the image forming apparatus is converted to on-line can be prevented.

The invention can also be embodied as computer readable code on a computer readable recording medium. The computer readable recording medium is any data storage device that can store data which can be thereafter read by a computer system. Examples of the computer readable recording medium comprise read-only memory (ROM), random-access memory (RAM), CD-ROMs, magnetic tapes, floppy disks, optical data storage devices, and carrier waves, such as data transmission through the Internet. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of controlling printing jobs in a terminal configured for use with an image forming apparatus, the method comprising:
receiving a printing job request;
detecting whether the image forming apparatus is off-line in response to the printing job request;
indicating that the image forming apparatus is off-line and receiving a selection indicating whether to perform or cancel the requested printing job when the image forming apparatus is off-line; and
storing image data associated with the requested printing job in a memory when the requested printing job is selected to be performed.

2. A method of controlling printing jobs in a terminal configured for use with an image forming apparatus, the method comprising:
detecting whether the image forming apparatus is on-line;
displaying information relating to printing jobs stored in a memory of the terminal when the status of the image forming apparatus is converted from off-line to on-line;
receiving a selection indicating whether to perform or cancel the displayedprinting jobs; and
transmitting image data relating to printing jobs that are selected to be performed to the image forming apparatus.

3. A method of controlling printing jobs in a terminal configured for use with an image forming apparatus, the method comprising:
receiving a printing job request;
detecting whether the image forming apparatus is off-line in response to the printing job request and receiving a selection regarding whether to perform or cancel the requested printing job when the image forming apparatus is off-line;
storing image data associated with the requested printing job in a memory of the terminal when the printing job is selected to be performed;
displaying information relating to the printing jobs stored in the memory when the status of the image forming apparatus is converted from off-line to on-line;
receiving a selection indicating whether to perform or cancel the displayed printing jobs; and
transmitting image data relating to printing jobs that are selected to be performed to the image forming apparatus.

4. A method according to any preceding claim, wherein the off-line state of the image forming apparatus comprises at least one of a connection state error between the terminal and the image forming apparatus, a state in which power is not supplied to the image forming apparatus, and a data transmitting and receiving error between the terminal and the image forming apparatus.

5. A method according to any preceding claim, wherein the storing of the image data in the memory comprises storing the image data with information relating to the requested printing job in the memory.

6. A method according to claim 5, wherein the information relating to the requested printing job comprises at least one of information relating to the image forming apparatus, a name of a document that is to be printed, and information relating to a driver of the image forming apparatus.

7. A computer program which, when executed by a processor, causes the method of any one of claims 1 to 6 to be performed.

8. Apparatus for controlling printing jobs in a terminal configured for use with an image forming apparatus, the apparatus comprising:
a status detecting unit for detecting whether the image forming apparatus is off-line in response to a printing job request;
an interface for indicating that the image forming apparatus is off-line and receiving a selection regarding whether to perform or cancel the requested printing job when the image forming apparatus is off-line; and
a printer driver for storing image data associated with the printing job request to be performed in a memory when the printing job is selected to be performed via the interface.

9. Apparatus according to claim 8, wherein the off-line state of the image forming apparatus comprises at least one of a connection state error between the terminal and the image forming apparatus, a state in which power is not supplied to the image forming apparatus, and a data transmitting and receiving error between the terminal and the image forming apparatus.

10. Apparatus according to claim 8 or 9, wherein the print driver stores the image data in the memory with information relating to the requested printing job.

11. Apparatus according to claim 8, 9 or 10, wherein the status detecting unit generates information relating to the requested printing job and outputs the generated information to the interface or broadcasts the generated information when the image forming apparatus is off-line, and the interface indicates that the image forming apparatus is off-line using the information relating to the printing job and receives a selection regarding whether to perform or cancel the requested printing job.

12. Apparatus for controlling printing jobs in a terminal configured for use with an image forming apparatus, the apparatus comprising:
a status detecting unit for detecting whether the image forming apparatus is on-line;
an interface unit for displaying information relating to printing jobs stored in the memory, and receiving a selection regarding whether to perform or cancel the displayed printing jobs when the status of the image forming apparatus is converted from off-line to on-line; and
a data transmitting unit for transmitting to the image forming apparatus image data relating to printing jobs selected to be performed.

13. Apparatus according to any one of claims 10 to 12, wherein the information relating to the printing job comprises at least one of information relating to the image forming apparatus, a name of a document that is to be printed, and information relating to a driver of the image forming apparatus.
